# FASCICULE DE BREVET EUROPEEN

(11) **EP 2 606 951 B1**
(45) Date de publication et mention de la délivrance du brevet: **26.10.2016**
(21) Numéro de dépôt: 12290400.6
(22) Date de dépôt: 20.11.2012
(51) Int. Cl.: B01D 53/14, C10G 11/18, F01K 23/06, G06Q 30/06

(54) **Procédé de craquage catalytique associé à une unité de traitement aux amines avec bilan CO2 amélioré**
Katalytischer Crackingprozess verbunden mit einer Aminwäsche und verbesserter CO2 Bilanz
Fluid catalytic cracking process linked to an amine treating unit with improved CO2 balance

(30) Priorité: 20.12.2011 FR 1103999
(43) Date de publication de la demande: 26.06.2013
(73) Titulaire: IFP Énergies nouvelles, 92852 Rueil-Malmaison Cedex (FR)
(72) Inventeur: Digne, Romina, 69007 Lyon (FR); Feugnet, Frederic, 69004 Lyon (FR); Do, Mai Phuong, 92400 Courbevoie (FR)

(56) Documents cités:
- EP-A1- 0 369 537
- WO-A1-2011/073671
- FR-A1- 2 939 693

## Description

### DOMAINE DE L'INVENTION

La présente invention se situe dans le domaine du captation du dioxyde de carbone (CO2) émis par des fumées provenant de la régénération des unités de craquage catalytique (notées en abrégé FCC).

La captation du CO2 est un aspect essentiel dans la lutte contre l'effet de serre dont il est un des responsables principaux. Afin de limiter le phénomène de réchauffement climatique, le dioxyde de carbone est extrait des fumées de combustion en vue d'être séquestré dans un réservoir souterrain. Les rejets de dioxyde de carbone proviennent pour la plus grande partie de l'activité industrielle, c'est à dire 60% en moyenne mondiale, dont 40% en provenance des fumées des centrales thermiques pour la production électrique.

Dans les raffineries, l'unité de craquage catalytique en lit fluidisé (FCC) peut être considérée comme une des plus émettrices de CO2 avec près de 20% des émissions à elle seule, les autres sources se trouvant dans les divers fours de réchauffage ou de distillation. Afin de réduire les émissions de CO2 d'une raffinerie, il apparaît clairement que le FCC est une cible privilégiée.

La présente invention propose une solution faisant appel à une technologie de captation connue, dite captation par les amines, mais développe un bilan des utilités largement excédentaire en terme de vapeur HP (haute pression) et BP (basse pression) du procédé intégré FCC/unité de captation aux amines grâce à un choix judicieux des entraînements des deux compresseurs du procédé et à une récupération d'énergie poussée. On obtient ainsi un procédé intégré FCC/unité de captation aux amines avec des émissions de CO2 très faibles voire négatives. On parle alors de procédé à crédit de CO2.

### EXAMEN DE L'ART ANTERIEUR

L'art antérieur décrit un procédé intégré FCC/unité de traitement aux amines dans lequel tout ou partie des fumées de régénération sont envoyées à l'unité de traitement aux amines.

L'unité de craquage catalytique est équipée d'un échangeur externe utilisant comme fluide chaud une partie du catalyseur prélevé dans la zone de régénération et les calories nécessaires à l'unité de traitement aux amines sont apportées intégralement par la vapeur générée par ledit échangeur externe. Dans l'art antérieur, la quantité de vapeur générée au niveau du procédé est insuffisante pour traiter l'intégralité des fumées du FCC.

Ainsi le brevet FR 2 939 693 décrit un procédé intégré de captation du CO2 émis par une partie au moins des fumées issues de la zone de régénération d'une unité de craquage catalytique (notée FCC) faisant appel à une unité de traitement aux amines (notée AMN) desdites fumées, dans lequel l'unité de craquage catalytique est équipée d'un échangeur externe utilisant comme fluide chaud une partie du catalyseur prélevé dans la zone de régénération, les calories nécessaires à la régénération de l'amine dans l'unité de traitement aux amines étant apportées intégralement par l'unité de craquage catalytique en utilisant la vapeur générée par ledit échangeur externe.

Dans le cadre de la présente invention, cet échangeur externe sera noté (CCE).

Le document EP 0369 537 A1 décrit une unité de craquage catalytique dans laquelle de la vapeur HP est produite par le refroidissement des fumées issues de la régénération, cette vapeur HP étant utilisée pour entrainer une turbine. La dite turbine n'est pas davantage précisée.

Le document WO 2011/073671 A1 décrit un appareillage pour la captation d'un gaz faisant appel notamment à une turbine à contre pression ( "back pressure turbine") pour la conduite du système de compression et la diminution de pression d'un fluide dit "fluide froid réchauffé".

### DESCRIPTION SOMMAIRE DES FIGURES

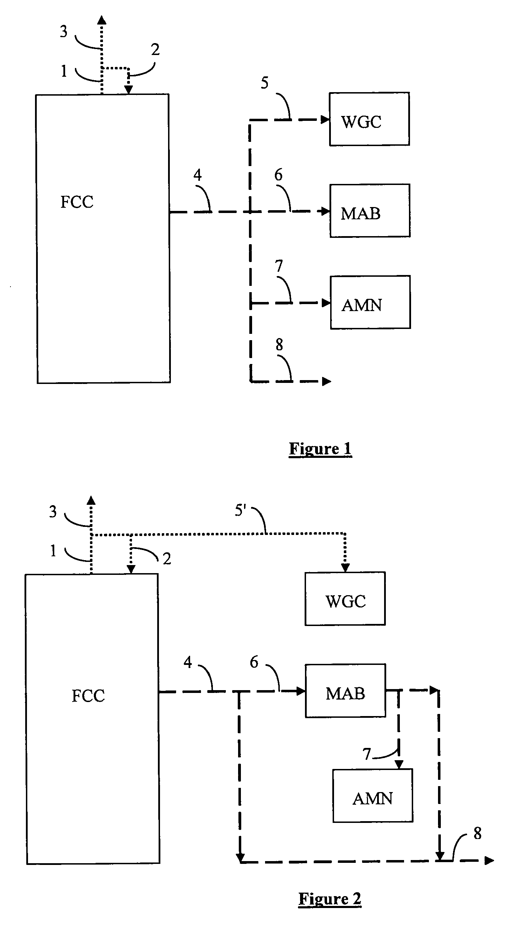

La figure 1 selon l'art antérieur est un schéma de l'utilisation de la vapeur HP générée par l'unité de FCC et montre ses 3 principales applications:
   a) vers la turbine faisant tourner le compresseur des gaz craqués (WGC),
   b) vers la turbine faisant tourner la soufflante de l'air de régénération (MAB) et,
   c) vers la régénération de l'amine de l'unité de traitement aux amines (AMN). L'excédent de vapeur selon l'art antérieur est quasiment nul. Les turbines utilisées selon l'art antérieur sont des turbines à condensation totale.
La figure 2 selon l'invention est un schéma de l'utilisation de la vapeur HP générée par l'unité de FCC et reprend son application b) vers la turbine faisant tourner la soufflante de l'air de régénération (MAB), la turbine étant selon l'invention une turbine à contre pression qui permet de dégager un flux de vapeur BP qui assure la régénération de l'amine de l'unité de de FCC et reprend son application b) vers la turbine faisant tourner la soufflante de l'air de régénération (MAB), la turbine étant selon l'invention une turbine à contre pression qui permet de dégager un flux de vapeur BP qui assure la régénération de l'amine de l'unité de traitement aux aminées (AMN). Dans ce cas selon l'invention, la mise en mouvement du compresseur des gaz craqués (WGC) est assurée par un moteur électrique.

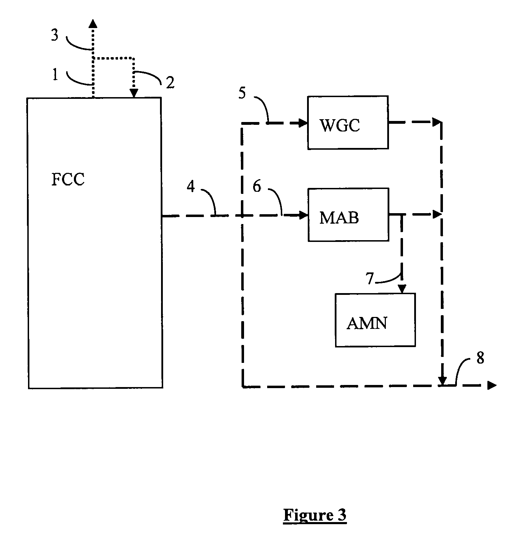

La figure 3 selon l'invention représente le schéma de l'utilisation de la vapeur HP générée par l'unité de craquage catalytique dans la variante où la dite vapeur HP est utilisée:
   a) vers la turbine faisant tourner le compresseur des gaz craqués (WGC), et
   b) vers la turbine faisant tourner la soufflante de l'air de régénération (MAB),
les deux turbines étant à contre pression, ce qui permet de dégager un flux de vapeur BP qui assure comme dans le cas précédent la régénération de l'amine de l'unité de traitement aux amines (AMN).

### DESCRIPTION SOMMAIRE DE L'INVENTION

La présente invention peut se définir comme un procédé intégré de captation du CO2 émis par les fumées issues de la zone de régénération d'une unité de craquage catalytique (FCC) traitant une coupe hydrocarbonée de type distillat sous vide ou résidu atmosphérique, faisant appel à une unité de traitement aux amines (AMN) des dites fumées pour en éliminer le CO2, procédé dans lequel la vapeur HP produite principalement par le refroidissement des fumées de régénération est utilisée pour assurer soit l'entrainement de la soufflante d'air de régénération (MAB) de l'unité FCC au moyen d'une première turbine à contre pression, soit l'entrainement du compresseur de gaz craqués (WGC) au moyen d'une seconde turbine à contre pression, la vapeur BP résultante étant utilisée pour assurer la régénération de l'amine dans l'unité de traitement aux amines (AMN), et l'excédent de vapeur HP et BP étant converti en crédit CO2.

Dans certains cas en relation avec le potentiel de production de coke de la charge (mesuré par la notion de "Carbon Conradson"), l'unité FCC est équipée d'un échangeur externe (CCE) la vapeur HP produite principalement par le refroidissement des fumées de régénération est utilisée pour assurer soit l'entrainement de la soufflante d'air de régénération (MAB) de l'unité FCC au moyen d'une première turbine à contre pression, soit l'entrainement du compresseur de gaz craqués (WGC) au moyen d'une seconde turbine à contre pression, la vapeur BP résultante étant utilisée pour assurer la régénération de l'amine dans l'unité de traitement aux amines (AMN), et l'excédent de vapeur HP et BP étant converti en crédit CO2.
L'expression "soit" doit être comprise au sens large, c'est à dire que 3 configurations sont possibles dans le cadre de la présente invention:
1) La vapeur HP est utilisée pour entrainer la soufflante de l'air de régénération au moyen d'une turbine à contre pression, et l'entrainement du compresseur des gaz craqués est assuré par un moteur électrique.
2) la vapeur HP est utilisée pour entrainer le compresseur des gaz craqués au moyen d'une turbine à contre pression, et l'entrainement de la soufflante d'air de régénération est assuré par un moteur électrique,
3) la vapeur HP est utilisée pour entrainer la soufflante d'air de régénération au moyen d'une première turbine à contre pression et pour entrainer le compresseur des gaz craqués au moyen d'une seconde turbine à contre pression.
Dans la troisième variante du procédé intégré de captation du CO2 émis par les fumées issues de la zone de régénération d'une unité de craquage catalytique (FCC) selon l'invention, la vapeur HP générée principalement par le refroidissement des fumées de régénération, est utilisé d'une part pour assurer l'entrainement de la soufflante de l'air de régénération (MAB) au moyen d'une première turbine à contre pression, et d'autre part pour assurer l'entrainement du compresseur des gaz craqués (WGC) au moyen d'une seconde turbine à contre pression, l'excédent de vapeur HP et BP étant converti en crédit CO2.
Par rapport à l'art antérieur le plus proche décrit dans le brevet FR 2 939 693, le procédé intégré selon la présente invention qui en constitue une amélioration, permet de dégager un crédit CO2 beaucoup plus important, comme cela est montré dans les exemples qui suivent. Lorsque l'unité FCC est équipée d'une turbine d'expansion (appelée aussi expandeur) fonctionnant sur les fumées de régénération et permettant de produire de l'électricité, le crédit CO2 est encore augmenté.
Selon la présente invention, le procédé intégré de captation du CO2 émis par les fumées issues de la zone de régénération d'une unité de FCC fait donc appel à une unité de craquage catalytique travaillant préférentiellement dans des conditions de sévérité élevées, c'est à dire:
- pour une unité avec un réacteur à écoulement ascendant ("riser"), un rapport C/O entre 2 et 20, préférentiellement compris entre 4 et 15, et avec une température de sortie du réacteur comprise entre 450°C et 650°C, préférentiellement comprise entre 470°C et 620°C,
- pour une unité avec un réacteur à écoulement descendant ("downer"), un rapport C/O entre 10 et 50, préférentiellement entre 10 et 30, et une température de sortie du réacteur comprise entre 480°C et 650°C, et préférentiellement comprise entre 520°C et 620°C.
Le procédé intégré de captation du CO2 émis par les fumées issues de la zone de régénération d'une unité de craquage catalytique (FCC) selon la présente invention fait appel à une unité de traitement aux amines qui utilise une amine choisie dans le groupe suivant: MEA (monoéthanolamine), DEA (diéthanolamine), MDEA (diméthyléthanolamine), DIPA (diisopropylamine), DGA (diglycolamine), des diamines, de la pipérazine, de l'hydroxyéthyl piperazine. De façon préférée, l'amine est choisie dans le sous groupe: MEA (monoéthanolamine), DEA (diéthanolamine), MDEA (diméthyléthanolamine).

De façon encore préférée, l'unité de traitement aux amines utilise la MEA (monoéthanolamine). Une autre alternative préférée est d'utiliser la Tétraméthylhexane-1,6-diamine, couramment nommé TMHDA.

### DESCRIPTION DETAILLEE DE L'INVENTION

La présente invention peut donc être considérée comme une amélioration du procédé intégré FCC/ traitement des fumées de régénération par une unité aux amines décrit dans le brevet FR 2939693 dans le sens où le procédé intégré FCC/unité aux amines selon la présente invention reste excédentaire en vapeur et/ou électricité, tout en ayant traité l'intégralité des fumées de l'unité FCC dans l'unité aux aminés.
Selon l'art antérieur le plus proche (représenté par le brevet cité), une partie seulement des fumées de régénération pouvait être traitée par l'unité de traitement aux amines avec un bilan vapeur qui était juste suffisant pour assurer la régénération de l'amine.
En d'autres termes, le procédé intégré FCC/unité aux amines selon la présente invention permet de traiter l'intégralité des fumées de la régénération de l'unité FCC en dégageant un excédent de vapeur qui va se traduire par un crédit de CO2.

Le procédé intégré FCC/unité de traitement aux amines nécessite une grande quantité d'énergie électrique ou thermique:
- pour régénérer l'amine après absorption du CO2,
- pour entraîner la soufflante d'air (MAB) qui comprime l'air nécessaire pour la régénération du catalyseur de la pression atmosphérique jusqu'à la pression du ou des régénérateurs (2 à 5 bar absolus),
- pour entraîner le compresseur de gaz craqués (WGC) qui comprime l'effluent gazeux en tête de la colonne de fractionnement principal de 1 à 2 bar absolus environ jusqu'à 15 à 20 bar absolus environ, (1 bar = 10⁵ Pascal)
- pour assurer l'injection de vapeur au niveau du riser et pour le stripage dudit catalyseur dans la zone réactionnelle.

La régénération de l'amine est généralement réalisée par chauffage avec de la vapeur basse pression (notée BP).

Les deux compresseurs de l'unité FCC, c'est à dire le compresseur des gaz craqués (WGC) et la soufflante d'air de régénération (MAB) peuvent être entrainés par des turbines à condensation totale ou des moteurs électriques. Selon l'art antérieur, ces deux compresseurs sont entraînés mécaniquement par des turbines à vapeur à condensation totale.
Les turbines à condensation totale sont généralement alimentées par de la vapeur haute pression et rejettent la vapeur à une pression inférieure à la pression atmosphérique, le vide étant réalisé par un condenseur. En sortie de condenseur, on obtient des condensats à une température inférieure à 50°C environ. Lorsqu'on utilise une turbine à condensation totale, l'enthalpie de vaporisation de l'eau est en quelque sorte "perdue" dans le condenseur.
Il existe également des turbines dites à contre-pression, qui sont généralement alimentées par de la vapeur haute pression et rejettent de la vapeur moyenne pression (MP) ou basse pression (BP).
La vapeur MP ou BP qui s'échappe de la turbine à contre-pression peut ensuite réchauffer ou vaporiser un autre fluide grâce à sa condensation. Contrairement à la turbine à condensation totale, l'enthalpie de vaporisation de l'eau n'est pas perdue, mais utilisée pour réchauffer ou vaporiser un fluide.
Enfin, les deux compresseurs ci dessus mentionnés peuvent également être entraînés par un moteur électrique. Dans le cadre de la présente invention on cherche à utiliser au mieux la vapeur MP ou BP disponible, et l'on utilise au moins une turbine à contre pression pour assurer l'entrainement du compresseurs des gaz craqués (WGC) et/ou l'entrainement de la soufflante de l'air de régénération (MAB).
Dans le cas où l'on utilise seulement une turbine à contre pression pour assurer l'entrainement de l'un des deux compresseurs, l'autre compresseur est entrainé par un moteur électrique.
Le procédé intégré FCC/unité de traitement aux amines, permet de produire de la vapeur HP et de l'énergie électrique à plusieurs niveaux :
- production de vapeur, à différents niveaux de pression mais principalement haute pression, grâce au refroidissement des fumées provenant du (des) régénérateur(s) et de l'incinérateur de CO lorsqu'il y en a un,
- production de vapeur ou d'eau chaude au niveau du fractionnement principal grâce aux reflux circulants,
- production de vapeur, le plus souvent de la vapeur HP, au niveau de l'échangeur externe (CCE), les calories étant apportées par du catalyseur prélevé en un ou plusieurs points de la zone de régénération de l'unité FCC,
- production d'électricité au niveau de la turbine d'expansion lorsque cette dernière est mis en oeuvre à partir des fumées issues du premier étage de régénération en vue de produire de l'électricité. Comme il sera vu plus loin, cette production d'électricité peut être convertie en un crédit CO2.

Le procédé selon la présente invention présente un bilan des utilités, notamment la vapeur BP, largement excédentaire grâce à un choix judicieux des entraînements des deux compresseurs du procédé et la présence d'une turbine d'expansion.
Le procédé selon l'invention utilise une première turbine à contre-pression pour entraîner la soufflante d'air (turbine alimentée par de la vapeur HP et libérant de la vapeur BP), et dans une variante préférée une seconde turbine à contre-pression pour entraîner le compresseur de gaz craqués (WGC).
Ainsi, on obtient un bilan des utilités globales (électricité et vapeur) du procédé intégré FCC/unité de traitement des fumées de régénération aux amines largement excédentaire, ce qui se traduit in fine par un crédit CO2.
Le choix de l'entraînement du compresseur de gaz craqués (turbine à contre-pression ou moteur électrique) dépend de la nature des utilités que l'on veut avoir en large excès (vapeur haute pression ou basse pression par exemple).
En effet, l'électricité générée par la turbine d'expansion est généralement supérieure aux besoins du moteur pour entraîner le compresseur de gaz craqués et aux consommations électriques des pompes et aérocondenseurs du procédé.
De même, la vapeur générée par le refroidissement des fumées de régénération, l'échangeur externe sur le catalyseur chaud (noté CCE), et le fractionnement principal des effluents, est supérieure aux besoins de vapeur du procédé selon l'invention.
Ceci est dû au fait que la vapeur HP envoyée à la turbine à contre-pression qui entraîne la soufflante d'air (MAB), est transformée en vapeur BP, directement utilisable pour régénérer l'amine.

Cette transformation de vapeur HP en vapeur BP permettant de régénérer l'amine est encore renforcée lorsque l'on utilise une seconde turbine à contre pression pour entrainer le compresseur de gaz craqués (WGC), ce qui est la variante préférée de la présente invention. L'excédent énergétique du procédé selon l'invention associé à la captation du CO2 des fumées du FCC en vue d'être séquestré, conduit à un bilan CO2 du procédé intégré qui peut être négatif. On parle alors de crédit CO2 et non plus d'émissions de CO2 du procédé.
Le bilan CO2 du procédé intégré FCC/unité de captation aux amines fait intervenir non seulement le CO2 présent dans les fumées rejetées dans l'atmosphère, mais aussi le CO2 résultant de la consommation ou production d'utilités, comme l'électricité ou la vapeur, au sein du procédé.
En effet, si le procédé nécessite de l'électricité, il faut ajouter au bilan CO2, les émissions générées pour produire cette électricité, même si ces émissions ont lieu sur un autre site.
A l'inverse, lorsque le procédé est excédentaire en électricité, l'excédent d'électricité est converti en crédit CO2.
Trois gaz à effet de serre (GES) sont pris en compte : le CO2, le CH4 et le N20, qui sont les principaux contributeurs à l'intensification de l'effet de serre, et qui sont les plus pertinents pour les systèmes étudiés. Les flux respectifs de ces GES sont agrégés en un équivalent CO2 (gaz de référence pour l'indicateur d'impact caractérisant la contribution d'un système à l'effet de serre), exprimé en masse de CO2 équivalent (noté dans la suite CO2éq).
La conversion de chacun de ces trois gaz en CO2éq est basée sur des coefficients appelés pouvoir de réchauffement global (PRG), traduisant la contribution relative au réchauffement climatique de l'émission d'1 g de chacun des gaz à effet de serre par comparaison avec l'émission d'1 g de CO2 sur une période déterminée (la période de temps la plus couramment utilisée étant 100 ans).
La consommation (ou production) d'utilités est convertie en émission (ou crédit) de CO2 en utilisant la notion de facteur d'émission qui est expliquée ci dessous.
Par exemple, un facteur d'émission de 100 gCO2éq/MJ pour l'électricité signifie que la production d'1 MJ d'électricité engendre l'émission de 100 g de CO2éq.
Il est important de noter que ces coefficients sont représentatifs d'un contexte géographique et temporel donnés et qu'ils peuvent varier significativement en fonction de la zone géographique ou de la date considérées (du fait de modes de production ou de distances de transport différents ou encore de l'évolution des technologies sur la période considérée).

L'exemple comparatif ci dessous permettra de mieux comprendre la mise en oeuvre de ces notions.

### EXEMPLE COMPARATIF

Dans cet exemple, nous considérons une unité de craquage catalytique (FCC) d'un résidu atmosphérique hydrotraité associée à une unité de traitement aux amines des fumées de régénération issues du FCC destinée à effectuer la captation du CO2.
L'exemple est comparatif en ce qu'il compare le bilan en utilités (vapeur et électricité) selon le procédé intégré de l'art antérieur tel que décrit dans le brevet FR 2939693, et selon le procédé intégré de la présente invention.
On effectue ensuite la traduction de ce bilan d'utilités en crédit CO2 selon la méthode des facteurs d'émission décrite plus haut.
Les caractéristiques de fonctionnement et les principaux rendements de l'unité FCC et de l'unité de traitement aux amines (AMN) sont indiqués dans le tableau 1 ci-dessous.

**Tableau 1 (caractéristiques de l'unité FCC et de l'unité aux amines)**

| | | | |
|---|---|---|---|
| | Débit de charge élévateur principal | 482 | t/h |
| | Température de sortie élévateur principal | 523 | °C |
| | Température régénérateur 1 | 671 | °C |
| | Température régénérateur 2 | 721 | °C |
| Unité FCC | Rapport C/O | 6,8 | - |
| | Rendement en gaz secs | 3 | % poids |
| | Rendement en LPG | 18 | % poids |
| | Rendement en essence (C5- 220°C) | 55 | % poids |
| | Rendement en coke | 7,3 | % poids |
| Unité de traitement aux amines | CO2 entrant dans l'unité aux amines | 141 | t/h |
| | Taux d'absorption de CO2 dans l'amine | 90 | % |

Le tableau 2 ci dessous donne le bilan des utilités ( électricité en MW et vapeur en t/h)
- selon l'art antérieur,
- selon la présente invention dans laquelle la soufflante de l'air de régénération (MAB) est entrainée par une turbine à contre pression (l'entrainement du compresseur de gaz craqués (WGC) étant assuré par un moteur électrique),
- selon la présente invention dans sa variante où le compresseur des gaz craqués (WGC) est lui même entrainé par une turbine à contre pression..

Le signe "-" devant une quantité d'utilité correspond à une production d'utilité et le signe "+" à une consommation d'utilité.

**Tableau 2 (comparaison du bilan utilités de l'art antérieur et de l'invention)**

| | Selon l'art antérieur | Selon l'invention | Selon l'invention (variante) | Unités |
|---|---|---|---|---|
| Entraînement de la soufflante d'air | Turbine à condensation totale | Turbine à contre-pression | Turbine à contre-pression | - |
| Entraînement du compresseur de gaz craqués | | Moteur électrique | | - |
| Consommation/production d'électricité | | | | |
| - Expandeur des fumées ex reg. | -16,9 | -16,9 | -16,9 | MW |
| - Pompes et aérocondenseurs | +3,1 | +3,5 | +3,5 | MW |
| - Compresseur de gaz craqués | 0 | +7,6 | 0 | MW |
| **TOTAL ELECTRICITE** | **-13,8** | **-5,8** | **-13,4** | MW |
| Consommation/production de vapeur HP | | | | |
| - Soufflante d'air | +100 | +211 | +211 | t/h |
| - Compresseur de gaz craqués | +31 | 0 | +65 | t/h |
| - Chaudière de récup.+ échangeur externe + récupération de chaleur au fractionnement principal | -317 | -325 | -325 | t/h |
| **TOTAL VAPEUR HP** | **-186** | **-114** | **-49** | t/h |
| Consommation/production de vapeur BP | | | | |
| - Unité aux amines | +180 | +180 | +180 | t/h |
| - Soufflante d'air | 0 | -211 | -211 | t/h |
| - Compresseur de gaz craqués | 0 | 0 | -65 | t/h |
| **TOTAL VAPEUR BP** | **+180** | **-31** | **-96** | t/h |

Selon l'art antérieur, la vapeur HP excédentaire était détendue et refroidie avant d'être utilisée comme vapeur BP dans l'unité aux amines.
D'après le tableau 2, le bilan vapeur selon l'art antérieur est quasiment nul (-6 t/h), alors que celui selon l'invention est très largement excédentaire (-145 t/h).
Pour obtenir ces valeurs on a sommé les totaux vapeur HP et BP, et on constate que la valeur de -145 t/h est la même dans les deux variantes selon l'invention.

Le tableau 3 ci dessous permet d'effectuer la traduction du bilan utilité du tableau 2 en bilan CO2, le signe "-" devant une quantité de CO2 correspond à un crédit CO2, et le signe "+" à une émission de CO2.

**Tableau 3 (comparaison du bilan CO2 selon l'art antérieur et selon l'invention)**

| | Selon l'art antérieur | Selon l'invention | Selon l'invention (variante) | Unités |
|---|---|---|---|---|
| CO2 rejeté dans l'atmosphère (fumées en sortie de l'unité aux amines) | +14,1 | +14,1 | +14,1 | tCO2éq/h |
| Crédit CO2 dû à la production d'électricité (1) | -7,4 | -3,1 | -7,1 | tCO2éq/h |
| Crédit CO2 dû à la production de vapeur (2) | 1,3 | -20,5 | -18,6 | tCO2éq/h |
| **TOTAL (bilan CO2)** | **+8,0** | **-9,5** | **-11,6** | **tCO2éq/h** |

| | | | | |
|---|---|---|---|---|
| (1) Facteur d'émission pour l'électricité égal à 148 gCO2éq/MJ (2) Facteur d'émission pour la vapeur égal à 72.1 gCO2éq/MJ | | | | |

Le CO2 rejeté dans l'atmosphère en sortie de l'unité aux amines est le même selon l'art antérieur et selon l'invention. Mais au final, le bilan CO2 selon l'invention (- 9,5 tCO2éq/h) est plus faible que dans le procédé selon l'art antérieur.
Cela est encore accentué dans la variante préférée de l'invention, le crédit CO2 étant de - 11,6 tCO2éq/h.
En effet, le crédit CO2 dû à l'excédent de vapeur HP et BP a été obtenu par conversion de l'excédent de vapeur selon un coefficient appelé facteur d'émission de la vapeur.

Ce facteur d'émission de la vapeur traduit les émissions de GES pour la production et le transport de la vapeur. Le fort excédent de vapeur selon l'invention s'explique par le choix des entraînements des compresseurs de l'unité FCC au moyen de turbines à contre pression. Il est donc encore plus élevé dans la variante faisant appel à deux turbines à contre pression.

## Revendications

1. Procédé intégré de captation du CO2 émis par les fumées issues de la zone de régénération d'une unité de craquage catalytique (FCC) traitant une coupe hydrocarbonée de type distillat sous vide ou résidu atmosphérique, faisant appel à une unité de traitement aux amines (AMN) des dites fumées pour en éliminer le CO2, dans lequel la vapeur HP produite principalement par le refroidissement des fumées de régénération est utilisée pour assurer l'entrainement de la soufflante de l'air de régénération (MAB) au moyen d'une première turbine à contre pression, et pour assurer l'entrainement du compresseur de gaz craqués (WGC) au moyen d'une seconde turbine à contre pression, la vapeur BP résultante des deux turbines à contre pression étant utilisée pour assurer la régénération de l'amine dans l'unité de traitement aux amines (AMN).

2. Procédé intégré de captation du CO2 émis par les fumées issues de la zone de régénération d'une unité de FCC selon la revendication 1, dans lequel l'unité de craquage catalytique (FCC) travaille avec un réacteur à écoulement ascendant ("riser") dans des conditions de sévérité élevées, c'est à dire un rapport C/O entre 2 et 20, préférentiellement compris entre 4 et 15, et avec une température de sortie du réacteur comprise entre 450°C et 650°C, préférentiellement comprise entre 470°C et 620°C.

3. Procédé intégré de captation du CO2 émis par les fumées issues de la zone de régénération d'une unité de FCC selon la revendication 1, dans lequel l'unité de craquage catalytique (FCC) travaille avec un réacteur à écoulement descendant ("downer") dans des conditions de sévérité élevées, c'est à dire avec un rapport C/O entre 10 et 50, préférentiellement entre 10 et 30, et une température de sortie du réacteur comprise entre 480°C et 650°C, et préférentiellement comprise entre 520°C et 620°C.

4. Procédé intégré de captation du CO2 émis par les fumées issues de la zone de régénération d'une unité de craquage catalytique (FCC) selon la revendication 1, dans lequel l'unité d'absorption aux amines (AMN) utilise une amine choisie dans le groupe suivant: MEA (monoéthanolamine), DEA (diéthanolamine), MDEA (diméthyléthanolamine), DIPA (diisopropylamine), DGA (diglycolamine), des diamines, de la pipérazine, de l'hydroxyéthyl piperazine.

5. Procédé intégré de captation du CO2 émis par les fumées issues de la zone de régénération d'une unité de FCC selon la revendication 1, dans lequel l'unité d'absorption aux amines (AMN) utilise une amine choisie dans le sous groupe suivant: MEA (monoéthanolamine), DEA (diéthanolamine), MDEA (diméthyléthanolamine).

6. Procédé intégré de captation du CO2 émis par les fumées issues de la zone de régénération d'une unité de FCC selon la revendication 1, dans lequel l'unité d'absorption aux amines (AMN) utilise la MEA (monoéthanolamine).

7. Procédé intégré de captation du CO2 émis par les fumées issues de la zone de régénération d'une unité de FCC selon la revendication 1, dans lequel l'unité d'absorption aux amine (AMN) utilise le composé absorbant Tétraméthylhexane-1,6-diamine, couramment nommé TMHDA.

8. Procédé intégré de captation du CO2 émis par les fumées issues de la zone de régénération d'une unité de FCC selon la revendication 1, dans lequel l'unité de craquage catalytique (FCC) est équipée d'une turbine d'expansion alimentée par les fumées provenant du premier régénérateur et convertissant l'énergie de pression de ces fumées en électricité.

## Patentansprüche

1. Integriertes Verfahren zum Einfangen von CO₂, das durch die Rauchgase emittiert wird, die aus der Regenerationszone einer katalytischen Krackanlage (FCC-Anlage) stammen, die einen Kohlenwasserstoffschnitt vom Typ des Vakuumdestillats oder des atmosphärischen Rückstands unter Verwendung von einer Aminbehandlungseinheit (AMN) der Rauchgase, um das CO₂ zu entfernen, behandelt, wobei der Hochdruckdampf, der hauptsächlich durch das Kühlen der Regenerationsrauchgase produziert wird, verwendet wird, um den Antrieb des Regenerationsluftgebläse (MAB) durch eine erste Gegendruckturbine zu gewährleisten und um den Antrieb des Verdichters der gecrackten Gase (WGC) durch eine zweite Gegendruckturbine zu gewährleisten, wobei der Niederdruckdampf, der aus den zwei Gegendruckturbinen resultiert, verwendet wird, um die Regeneration des Amins in der Aminbehandlungseinheit (AMN) zu gewährleisten.

2. Integriertes Verfahren zum Einfangen von CO₂, das durch die Rauchgase emittiert wird, die aus der Regenerationszone einer FCC-Einheit nach Anspruch 1 stammen, wobei die katalytische Krackanlage (FCC-Anlage) unter hochstringenten Bedingungen, das heißt mit einem C/O-Verhältnis zwischen 2 und 20, vorzugsweise zwischen 4 und 15, und mit einer Austrittstemperatur des Reaktors, die zwischen 450 °C und 650 °C, vorzugsweise zwischen 470 °C und 620 °C beträgt, mit einem Aufwärtsströmungsreaktor ("Riser") arbeitet.

3. Integriertes Verfahren zum Einfangen von CO₂, das durch die Rauchgase emittiert wird, die aus der Regenerationszone einer FCC-Einheit nach Anspruch 1 stammen, wobei die katalytische Krackanlage (FCC-Anlage) unter hochstringenten Bedingungen, das heißt mit einem C/O-Verhältnis zwischen 10 und 50, vorzugsweise zwischen 10 und 30, und einer Austrittstemperatur des Reaktors, die zwischen 480 °C und 650 °C und vorzugsweise zwischen 520 °C und 620 °C beträgt, mit einem Abwärtsströmungsreaktor ("Downer") arbeitet.

4. Integriertes Verfahren zum Einfangen von CO₂, das durch die Rauchgase emittiert wird, die aus der Regenerationszone einer katalytischen Krackanlage (FCC-Anlage) nach Anspruch 1 stammen, wobei die Aminbehandlungseinheit (AMN) ein Amin verwendet, das aus der folgenden Gruppe ausgewählt wird: MEA (Monoethanolamin), DEA (Diethanolamin), MDEA (Dimethylethanolamin), DIPA (Diisopropylamin), DGA (Diglykolamin), Diamine, Piperazin, Hydroxyethylpiperazin.

5. Integriertes Verfahren zum Einfangen von CO₂, das durch die Rauchgase emittiert wird, die aus der Regenerationszone einer FCC-Einheit nach Anspruch 1 stammen, wobei die Aminbehandlungseinheit (AMN) ein Amin verwendet, das aus der folgenden Untergruppe ausgewählt wird: MEA (Monoethanolamin), DEA (Diethanolamin), MDEA (Dimethylethanolamin).

6. Integriertes Verfahren zum Einfangen von CO₂, das durch die Rauchgase emittiert wird, die aus der Regenerationszone einer FCC-Einheit nach Anspruch 1 stammen, wobei die Aminbehandlungseinheit (AMN) MEA (Monoethanolamin).

7. Integriertes Verfahren zum Einfangen von CO₂, das durch die Rauchgase emittiert wird, die aus der Regenerationszone einer FCC-Einheit nach Anspruch 1 stammen, wobei die Aminbehandlungseinheit (AMN) die absorbierende Verbindung Tetramethylhexan-1,6-diamin, das allgemein als TMHDA bekannt ist, verwendet.

8. Integriertes Verfahren zum Einfangen von CO₂, das durch die Rauchgase emittiert wird, die aus der Regenerationszone einer FCC-Einheit nach Anspruch 1 stammen, wobei die katalytische Krackanlage (FCC-Anlage) mit einer Expansionsturbine ausgestattet wird, die von den Rauchgasen gespeist wird, die von dem ersten Regenerator stammen und die Druckenergie dieser Rauchgase in Strom umwandeln.

## Claims

1. An integrated process for the capture of CO₂ emitted by the fumes exiting from the regeneration zone of a catalytic cracking (FCC) unit treating a vacuum distillate or atmospheric residue type hydrocarbon cut, using a unit for the amine treatment (AMN) of said fumes to eliminate CO₂ therefrom, in which process HP steam produced mainly by cooling fumes exiting from the regeneration zone, is used for driving the regenerative air blower (MAB) by mean of one counter-pressure turbine and for driving the cracked gas compressor (WGC) by mean of a second counter-pressure turbine, the BP steam coming from the two counter-pressure turbine being used for regenerating the amine in the amine treatment unit (AMN).

2. An integrated process for the capture of CO₂ emitted by the fumes exiting from the regeneration zone of a FCC unit according to claim 1, in which the catalytic cracking unit (FCC) operates with a riser reactor under high severity conditions, i.e. a C/O ratio in the range 2 to 20, preferably in the range 4 to 15, and with a reactor outlet temperature in the range 450°C to 650°C, preferably in the range 470°C to 620°C.

3. An integrated process for the capture of CO₂ emitted by fumes exiting from the regeneration zone of a FCC unit according to claim 1, in which the catalytic cracking unit (FCC) operates with a downer reactor under high severity conditions, i.e. with a C/O ratio in the range 10 to 50, preferably in the range 10 to 30, and a reactor outlet temperature in the range 480°C to 650°C, preferably in the range 520°C to 620°C.

4. An integrated process for the capture of CO₂ emitted by fumes exiting from the regeneration zone of a catalytic cracking (FCC) unit according to claim 1, in which the amine absorption unit (AMN) uses an amine selected from the following group: MEA (monoethanolamine), DEA (diethanolamine), MDEA (dimethylethanolamine), DIPA (diisopropylamine), DGA (diglycolamine), diamines, piperazine, and hydroxyethyl piperazine.

5. An integrated process for the capture of CO₂ emitted by the fumes exiting from the regeneration zone of a FCC unit according to claim 1, in which the amine absorption unit (AMN) uses an amine selected from the following group: MEA (monoethanolamine), DEA (diethanolamine) and MDEA (dimethylethanolamine).

6. An integrated process for the capture of CO₂ emitted by the fumes exiting from the regeneration zone of a FCC unit according to claim 1, in which the amine absorption unit (AMN) uses MEA (monoethanolamine).

7. An integrated process for the capture of CO₂ emitted by the fumes exiting from the regeneration zone of a FCC unit according to claim 1, in which the amine absorption unit uses the adsorbent compound tetramethylhexane-1,6-diamine, generally known as TMHDA.

8. An integrated process for the capture of CO₂ emitted by the fumes exiting from the regeneration zone of a FCC unit according to claim 1, in which the catalytic cracking unit (FCC) is equipped with an expansion turbine supplied with the fumes deriving from a first regenerator and converting the pressure of said fumes into electricity.
